# EUROPEAN PATENT APPLICATION

(11) **EP 3 276 331 A1**
(43) Date of publication of application: **31.01.2018**
(21) Application number: 16305958.7
(22) Date of filing: 25.07.2016
(51) Int. Cl.: G01N 21/15, G01N 21/05

(54) **FILTER ARRANGEMENT AND UREA SENSOR SYSTEM COMPRISING SAME**

(71) Applicant: MEAS France, 31027 Toulouse Cedex 3 (FR)
(72) Inventor: Toulon-Meekhun, Dariga, 31520 Ramonville (FR); Chavarria, Gael, 31300 Toulouse (FR); Leger, Vincent, 31200 Toulouse (FR); Gaunard, Florent, 31400 Toulouse (FR); Fougere, Tom, 31300 Toulouse (FR)
(74) Representative: Grünecker Patent- und Rechtsanwälte PartG mbB

(57) **Abstract**

The invention relates to a filter arrangement (3) for protecting at least one fluid sensor (15) of a sensor system (1), in particular a urea sensor system (1), against bubbles (27), wherein the arrangement (3) comprises at least one semi-permeable filter member (24) and at least one support structure (23) which at least partially encloses at least one sensor volume (21) for receiving the at least one fluid sensor (15). The invention further relates to a urea sensor system (1) comprising at least one fluid sensor (15). In order to provide filter arrangement (3) and a urea sensor system (1) which improve the protection against gas bubbles and which are cost efficient to produce, the invention provides that the filter member (24) forms a filter bag (25) which is separate from and attached to the support structure (23).

## Description

The invention relates to a filter arrangement for protecting at least one fluid sensor of a sensor system, in particular a urea sensor system, wherein the arrangement comprises at least one semi-permeable filter member and at least one support structure which at least partially encloses at least one sensor volume for receiving the at least one fluid sensor. The invention further relates to a urea sensor system comprising at least one fluid sensor. Finally, the invention relates to a filter member for protecting at least one fluid sensor of a sensor system.

Filter arrangements for fluid sensors and urea sensor systems are known in the prior art. The filter arrangements can be used to protect fluid sensors against sources of irritation, such as debris, frozen liquid and in particular against gas bubbles. The creation of gas bubbles in liquids is critical for the functionality of fluid sensors because gas bubbles may disturb the measurements and might lead to erroneous data. Especially for liquids containing urea, it is known that, a movement of the liquid can lead to an intense formation of gas bubbles. Known solutions to prevent the formation of gas bubbles in a fluid sensor, especially in a urea sensor system, comprise a semi-permeable filter member which is formed as part of the support structure. Other known filter arrangements are formed as system envelopes which surround the whole fluid system inside a tank. However, these filter members have drawbacks. First, they need a lot of material for production or complicated manufacturing processes so that manufacturing of these known bags is expensive. Secondly, adaption of the known filter members for different fluids and or different operational areas may be difficult and expensive as well.

It is therefore an objective of the invention to provide a filter arrangement and a urea sensor system as mentioned in the beginning, which overcome these drawbacks, minimize the manufacturing costs, and improve the protection of a fluid sensor against gas bubbles and other sources of irritation.

For the filter arrangement as mentioned in the beginning, this objective is achieved in that the filter member forms a filter bag which is separate from and attached to the support structure. For the urea sensor system as mentioned in the beginning, the objective is achieved in that the at least one fluid sensor is arranged in the sensor volume of a filter arrangement according to the invention. For the filter member according to the invention, the problem is solved in that the filter member is formed as a filter bag of a filter arrangement or of a urea sensor system according to the invention.

The solution according to the invention has the advantage that the filter member can be manufactured independently from the support structure. Therefore, the manufacturing processes may be simplified. Further, adaption of the arrangement to different fluids or operational areas may be simplified as well. In the following, further improvements of the invention are described. The additional improvements may be combined independently of each other, depending on whether a particular advantage of a particular improvement is needed in a specific application.

According to a first advantageous improvement, the at least one support structure may be at least partially enclosed by the at least one filter bag. In particular, the at least one support structure may be covered by the at least one filter bag. Due to this arrangement, the filter bag may be spanned and/or supported by the support structure to retain a desired shape. Further, enclosing the support structure, which itself at least partially encloses the sensor volume may lead to an effective protection against bubbles. Lastly, especially in the case that the filter bag covers the support structure, the size of the filter bag may be limited to a size which allows covering the support structure. This arrangement may lead to reduced material costs. Of course, this does not exclude embodiments where the size of the filter bag exceeds the size of the support structure. This may be beneficial if also other elements are intended to be enclosed by the filter bag or if the liquid volume between the filter bag and the support structure needs to be increased.

The at least one filter bag may have a sack-like shape. A sack-like shape allows for a simple structure of the filter bag and may also provide effective protection against gas bubbles if a sensor is placed inside the sack. Consequently, if the filter bag has a sack-like shape, the sensor volume is preferably located inside the sack. It may also be advantageous if the support structure is located inside the sack.

An opening of the filter bag, or, if the filter bag has a sack-like shape, an opening of the sack may be arranged on a side of the sensor volume which is intended to allow sensor signal lines and/or other necessary connections be connected to the fluid sensor. In other words, sensor signal lines or other connections may reach the fluid sensor through the opening of the bag. The opening of the filter bag may be closed around such lines or connections. If necessary, a closing member or adapter may be present between the filter bag and said lines or connections, closing the opening of the bag.

The filter bag may comprise fibers. A filter bag comprising fibers or a filter bag made from fibers may provide the required semi-permeable properties. In order to tailor the properties of the filter bag for certain requirements, such as permeability, stiffness or durability, it may be beneficial if the filter bag comprises different types of fibers.

The fibers may be single fiber, thread, yarn, polymers, wires, organic fibers, synthetic fibers or other appropriate fiber-like structures.

According to another advantageous embodiment, the filter bag may comprise at least two or more types of fibers, having different widths. Thereby, the fiber with the higher width may provide stability or stiffness of the filter bag whereas the fiber with the lower width may provide the semi-permeable property of the filter bag. Additionally or alternatively to fibers having different widths, the fibers may differ in material composition, strength or other properties.

The filter bag may comprise regions which are composed of one type of fibers only. As a result, the properties of said fiber type may dominate in that the region. For example, the region may provide fibers which allow the desired semi-permeability of the filter bag. Other regions may be composed of a fiber type which provides a desired stability of the filter bag. At least one of said regions may be encircled by the at least one other fiber type. For example, the filter bag may comprise regions which are composed of fibers having a certain width. These regions may be encircled by regions which are composed of fibers having a higher width. The regions of fibers having the higher width may form a stable structure for the filter bag, whereas the encircled regions composed of fibers with the lower width may form semi-permeable windows for the fluid.

The filter bag may have at least one textile filter layer. Textiles are a simple way of providing semi-permeable material made from fibers for the filter bag.

According to another advantageous embodiment, the filter bag may comprise at least two filter layers which mainly consist of fibers of different types, in particular of different widths. Just by way of example, the filter bag may have at least one layer made from a first type of fiber with a certain width and at least one other layer made from a second type of fiber having a larger width than the first type of fiber. The at least one layer made of the second fibers may provide stability for the filter bag, whereas the layer made of the first type of fibers may provide the desired semi-permeability of the filter bag.

In another advantageous embodiment, the at least one filter layer may consist of at least two types of fibers, in particular fibers having at least two different widths. This may allow a semi-permeable layer to comprise its own fibers which provide stability for the layer.

In order to provide a layer which is easy to manufacture, which provides longevity, and which may also be made from more than one type of fiber, the at least one filter layer may be made from woven textile material.

According to another advantageous embodiment, the at least one filter layer may be made from non-woven textile material. Non-woven materials are known materials for filters, such as coffee or air filters and can be manufactured in an easy and cost efficient manner.

It may also be advantageous if the filter bag is composed of a combination of layers made from woven or non-woven textile material.

The filter bag may comprise at least two layers which are composed of at least one semi-permeable material each, wherein each semi-permeable material is made from fibers. The at least two layers may be similar or different. The filter bag may also comprise further layers, for example, the at least two layers which are composed of at least one semi-permeable material each.

The urea sensor system may be further improved in that the fluid sensor is an optical sensor, in particular a near infrared urea quality sensor. These sensors are highly sensitive in analyzing the quality of a urea solution. Such a sensor may in particular benefit from a filter arrangement according to the invention, since a decreased amount of bubbles may improve the sensitivity of the optical measurement. This does not exclude the use of other sensor types. Just by way of example, the sensor may be an ultrasonic sensor as well.

In order to retain the filter arrangement compact and not to influence the extraction of urea solution, for example from a tank, the urea sensor system may comprise at least one inlet for a suction tube which is not enclosed by the at least one filter bag. In the alternative or additional, the sensor system may comprise at least one heater and/or coolant tube.

In the following, the invention and its improvements are described in greater details using exemplary embodiments and with reference to the figures. As described above, the various features shown in the embodiments may be used independently of each other in specific applications.

In the following figures, elements having the same function and/or the same structure will be referenced by the same reference signs.

In the drawings:
- Fig. 1: shows a schematic view of a urea sensor system with a filter arrangement according to the invention;
- Fig. 2: shows a first embodiment of a support structure for a filter arrangement according to the invention in a perspective view;
- Fig. 3: shows a second embodiment of a support structure for a filter arrangement according to the invention in a perspective view;
- Fig.4: shows a third embodiment of a support structure for a filter arrangement according to the invention in a perspective view;
- Fig. 5: shows a first embodiment of a filter bag according to the invention in a close-up view;
- Fig. 6: shows a second embodiment of a filter bag according to the invention in a close-up view, showing an layers of a multi-layer structure;
- Fig. 7: shows a close-up view of an outer layer of the multi-layer structure of the second embodiment as shown in Fig. 6;
- Fig. 8: shows a third embodiment of a filter bag made from a woven material according to the invention in a close-up view;
- Fig. 9: shows a fourth embodiment of a filter bag according to the invention; and
- Fig. 10: shows a schematic side view of a preferred embodiment of the filter bag according to the invention.

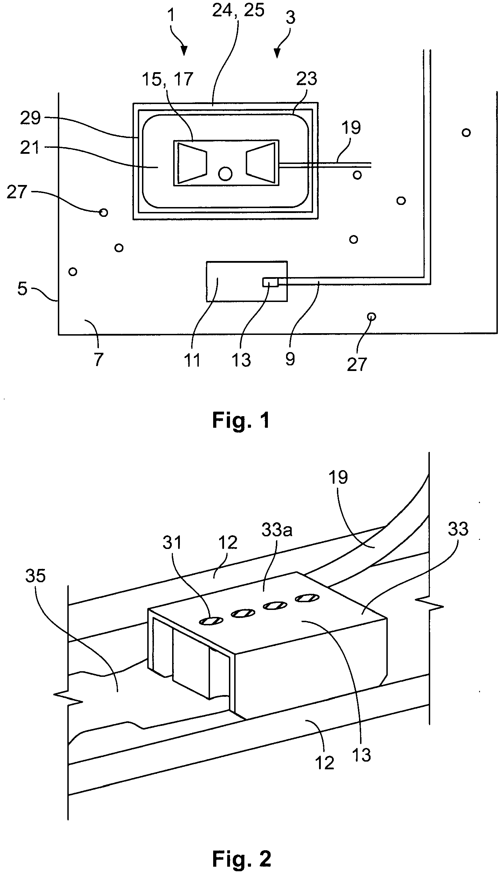

Fig. 1 shows a urea sensor system 1 according to the invention, including a filter arrangement 3 according to the invention.

The system 1 is preferably used in a urea solution tank 5, containing a urea solution 7. The urea tank 5 may be provided with a suction tube 9 comprising an inlet filter 11 which protects the inlet 13 of the suction tube 9. The urea tank may also be provided with at least one heater and/or coolant tube 12. In the following, the heater and/or coolant tube 12 is referred to as heater tube 12. The suction tube 9, the inlet filter 11 and heater tube 12 may be part of the urea sensor system. This means, they may provided attached to each other. For example the filter arrangement 3 may be attached to the suction tube 9 and the heater tube 12 to form a compact system.

The filter arrangement 3 comprises a fluid sensor 15, which is preferably an optical sensor 17. More preferably, the fluid sensor 15 is a near infrared urea quality sensor.

The sensor 15 is connected to sensor signal lines 19 which preferably connect the sensor 15 to a power supply and a measurement control system (both not shown) outside the tank 5.

The sensor 15 is arranged in a sensor volume 21. The sensor volume 21 is enclosed by the support structure 23. The support structure 23 is preferably made from a hard material such as plastic. More preferably, the support structure 23 is a part made from injection molding. Preferred embodiments of the support structure 23 are described with respect to Figs. 2, 3 and 4.

The support structure 23 itself is enclosed by a filter member 24, which is formed as a filter bag 25. Therefore, the filter bag 25 encloses the support structure 23, the sensor volume 21 and the sensor 15. The filter bag 25 is adapted to protect the sensor 15 against bubbles 27 which may be present in the urea solution 7.

In a preferred embodiment of the arrangement 3 and the sensor system 1, the filter bag 25 does not enclose the inlet 13 of the suction tube 9. This particular embodiment has two advantages: Firstly, the filter bag 25 may be compact in size. Secondly, the material used for the filter bag 25 and for the inlet filter 11 may be chosen independently and can therefore be adapted for the respective requirements. Where the filter bag 25 is basically used for protecting the sensor 15 against bubbles 27, the inlet filter 11 is mainly intended for protecting the inlet 13 against debris and/or frozen solution 7.

The filter bag 25 is separate from the support structure 23 and attached to the same. For example, the filter bag 25 may be attached to the support structure 23 by closing it around the support structure 23 such that it cannot be removed from the support structure 23 without damaging it. Additionally or alternatively, the filter bag 25 may be attached to the support structure by at least one fixing member (not shown) such as a clamp, a screw, a band or glue.

The filter bag 25 has a sack-like shape. The bottom 29 of the sack-like filter bag 25 is preferably arranged opposite to the sensor signal lines 19 of the sensor 15. In this case, an opening (not shown) of the sack-like filter bag 25 may allow the sensor signal lines 19 to pass through the filter bag 25. Alternatively, the bottom 29 of the sack-like filter bag 25 may be arranged at other positions, depending on the embodiments of the support structure 23, the sensor 15 and the sensor signal lines 19.

In order to allow the filter bag 25 to function, the opening may be tightly closed around the sensor signal lines 19, such that the fluid 7 may not pass through the opening.

Fig. 2 shows a first embodiment of a support structure 23 for a filter arrangement 3 according to the invention in a perspective view. The support structure 23 has an overall block-like shape. The support structure 23 encloses the sensor volume 21 (not shown). This means, the sensor 15 (not shown in Fig. 2) is enclosed inside the support structure 23.

In order to let fluid (not shown here) reach the sensor 15, the support structure 23 comprises several through-holes 31. The through-holes 31 are preferably formed in at least one wall 33 of the support structure 23. It is also possible that the support structure 23 is provided with a single through-hole 31.

The support structure 23 may be seated on the heater tube 12 or on other parts 35 of a fluid extraction system. Preferably, the support structure 23 comprises at least one opening (not shown) for at least one sensor signal line of the sensor 15.

Preferably, the through-holes 31 are arranged in a top wall 33a of the support structure 23. The top wall 33a is preferably arranged opposite to the heater tube 12. The arrangement of the through-holes 31 in a top wall 33a allows bubbles which may be formed in the sensor volume 21 leaving the support structure 23 by ascending through the through-holes 31.

The through-holes 31 of the first embodiment preferably have a circular cross section. Alternatively, the through-holes may also have an elliptic or square cross section.

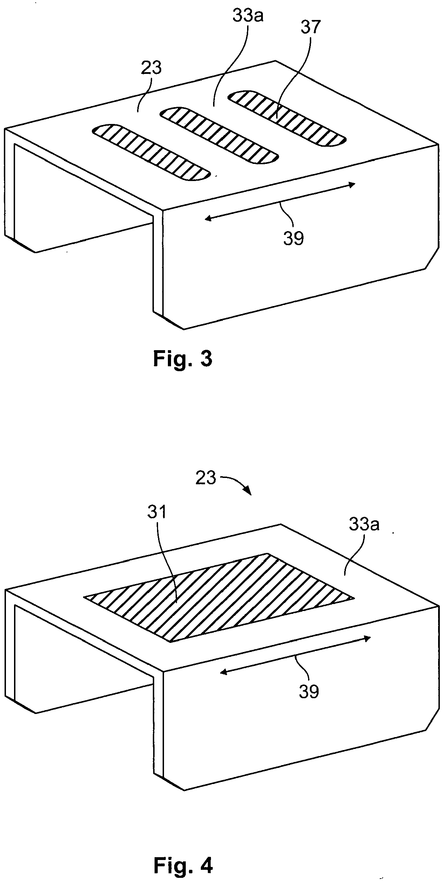

In Fig. 3, a second embodiment of a support structure 23 for a filter arrangement 3 according to the invention is shown. For the sake of brevity, only the differences to the first embodiment of the support structure 23 are described.

Instead of through-holes 31, the second embodiment of the support structure 23 comprises a plurality of slits 37 which are arranged in a top wall 33a. The slits 37 are arranged parallel with each other and perpendicular to a longitudinal direction 39 of the support structure 23.

A third embodiment of a support structure 23 for an arrangement 3 is shown in Fig. 4. The support structure 23 differs from the previous embodiments in that the support structure 23 is provided with a single through-hole 31 in the top wall 31 a instead of a plurality of through-holes 31. The through-hole 31 has a longitudinal rectangular shape which extends along the longitudinal direction 39 of the support structure 23.

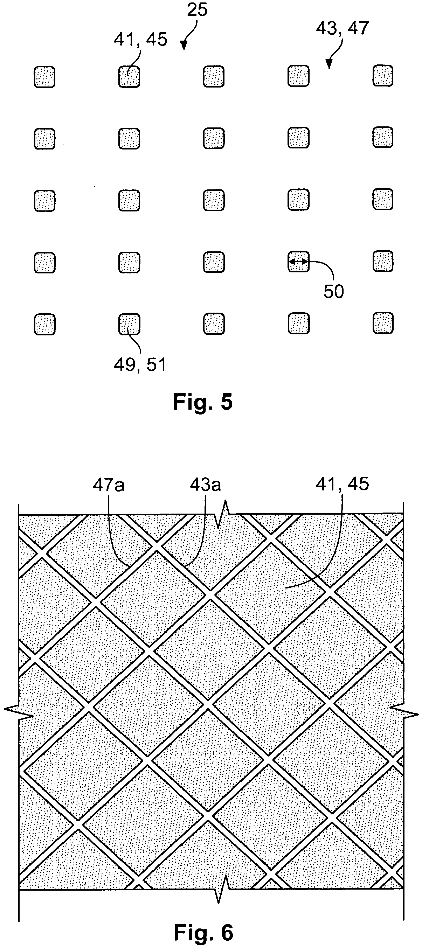

Fig. 5 shows a close up view of a first embodiment of a filter bag 25 which comprises two textile filter layers 41 and 43. The filter layer 41 comprises fibers 45, whereas the filter layer 43 comprises fibers 47. The fibers 45 and 47 have different widths. The fibers 45 have smaller widths compared to the fibers 47. The layer 43 mainly provides stability for the filter bag 25, whereas the layer 41 is adapted for providing a desired permeability which allows fluid to pass through the layer 41, but which prevents bubbles from passing through same.

In Fig. 5, the layers 41 and 43 form a multi-layer structure. The layer 43 comprises windows 49 which open up to the layer 41. In these windows 49, regions 51 are formed in the filter bag 25, which are composed of the fibers 41 only. These regions 51 are encircled by fibers 47 from the layer 43. Preferably, the windows 49 have a diameter 50 between 250 and 750 µm.

The layers 41 and 43 of the first embodiment are preferably made from non-woven material.

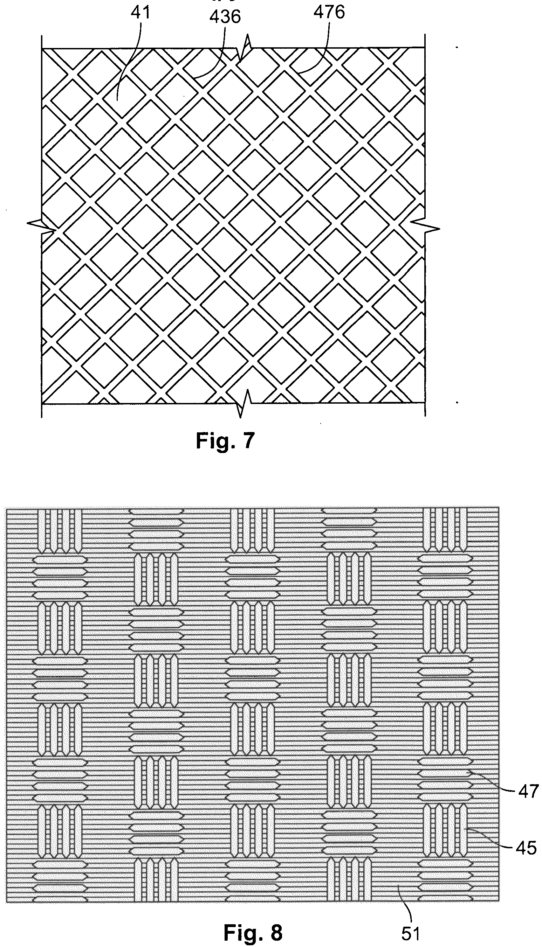

In Figs. 6 and 7, a second embodiment of material for a filter bag 25 is shown. The material consists of several layers of preferably non-woven material.

Fig. 6 shows a layer 43a and a layer 41. Preferably, the layer 43a is embedded between two layers 41, which preferably have identical properties. For the sake of better visibility, the second layer 41 is not shown. Fig. 7 shows a layer 43b and a layer 41. The layers 41, 43a and 43b preferably form a multilayer structure comprising at least four layers. Thereby, the layer 43b forms an outer layer of a filter bag 25. In a direction towards the sensor volume 21, the layer 43b is followed by a first layer 41, the layer 43a and a second layer 41.

The layers 43a and 43b are made from fibers 47a and 47b. The layers 41 are made from fibers 45. Thereby, the fibers 45 have smaller widths than the fibers 47a and the fibers 47b. The fibers 47a and 47b may have a similar width.

In the described filter bag 25, the layers 43a and 43b provide stability for the filter bag 25, whereas the layers 41 provide the semi-permeability of the filter bag 25.

Fig. 8 shows an example of woven textile material for a filter bag 25. The material is woven from two different fibers 45 and 47, wherein the fibers 45 have a smaller width than the fibers 47. The pattern of the weave forms regions 51 which consist only of the fibers 45.

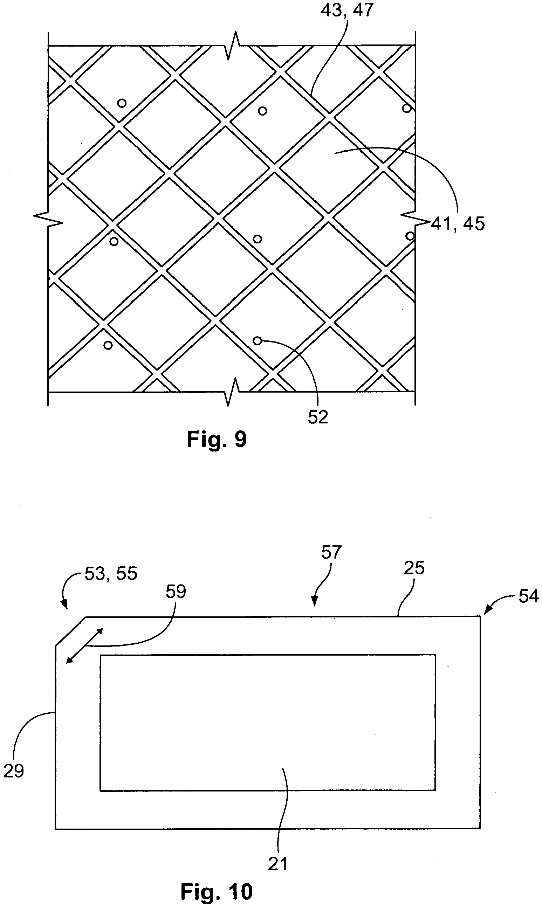

Fig 9 shows another embodiment of material for a filter bag 25. The material is composed of two layers 41 and 43. Layer 41 is made from non-woven material which provides the semi-permeability of the filter bag 25, whereas layer 43 is made from a net-like structure which provides stability for the filter bag 25. Both materials may be made from fibers, wherein layer 41 is made from fibers 45 having a smaller width than fibers 47 which form the layer 43. In order to prevent the layers 41 and 43 from separating, the bag 25 is provided with connection regions 52, in which the layers are connected to each other. Just by way of example, the layers 41 and 43 may be connected by adhesive bonding or punching.

In Fig. 10, a preferred embodiment of a filter bag 25 as shown in a schematic side view. At the bottom 29, the filter bag comprises a cut-out 53. The cut-out 53 may easily be formed by cutting away an edge 54 of the filter bag 25. The cut-out 53 is just by way of example shown on the bottom 29 of a sack-like filter bag 25.

In the cut-out 53, a through-hole 55 may be formed which allows a direct flow of liquid into the sensor volume 21 in order to prevent bubbles 27 to enter through the through-hole 55 into the sensor volume 21, the cut-out is preferably arranged on an upper side 57 of the filter bag 25. This allows bubbles 27 to ascend through the through-hole 55. If the filter bag 25 comprises several layers of material, then the cut-out 53 is preferably present in all layers.

The through-hole 55 preferably has a diameter 59 between 0,5 and 3 cm.

### REFERENCE SIGNS

- 1: Urea sensor system
- 3: Filter arrangement
- 5: Tank
- 7: Fluid
- 9: Suction tube
- 11: Inlet filter
- 12: Heater tube
- 13: Inlet
- 15: Fluid sensor
- 17: Optical sensor
- 19: Sensor signal line
- 21: Sensor volume
- 23: Support structure
- 24: Filter member
- 25: Filter bag
- 27: Bubbles
- 29: Bottom
- 31: Through-hole
- 33: Wall
- 33a: Top wall
- 35: Other part
- 37: Slit
- 39: Longitudinal direction
- 41: Layer
- 43: Layer
- 43a: Layer
- 43b: Layer
- 45: Fiber
- 47: Fiber
- 47a: Fiber
- 47b: Fiber
- 49: Window
- 50: Diameter of window
- 51: Region
- 52: Connection region
- 53: Cut-out
- 54: Edge
- 55: Through-hole
- 57: Upper side

## Claims

1. Filter arrangement (3) for protecting at least one fluid sensor (15) of a sensor system (1), in particular a urea sensor system (1), against bubbles (27), wherein the arrangement (3) comprises at least one semi-permeable filter member (24) and at least one support structure (23) which at least partially encloses at least one sensor volume (21) for receiving the at least one fluid sensor (21), **characterized in that** the filter member (24) forms a filter bag (25) which is separate from and attached to the support structure (23).

2. Arrangement (3) according to claim 1, **characterized in that** the at least one support structure (23) is at least partially enclosed by the at least one filter bag (25).

3. Arrangement (3) according to claim 1 or 2, **characterized in that** the at least one filter bag (25) has a sack-like shape.

4. Arrangement (3) according to one of claims 1 to 3, **characterized in that** the filter bag (25) comprises different types of fibers (45, 47).

5. Arrangement (3) according to claim 4, **characterized in that** the filter bag (25) comprises at least two types of fibers (45, 47), having different widths.

6. Arrangement (3) according to claim 5, **characterized in that** the filter bag (25) comprises regions (51) which are composed of one type of fibers (45, 47) only.

7. Arrangement (3) according to one of claims 4 to 6, **characterized in that** the filter bag (25) has at least one textile filter layer (41, 43).

8. Arrangement (3) according to claim 7, **characterized in that** the filter bag (25) comprises at least two filter layers (41, 43) which mainly consists of fibers (45, 47) of different types.

9. Arrangement (3) according to claim 7 or 8, **characterized in that** the at least one filter layer (41, 43) consists of at least two types of fibers (45, 47).

10. Arrangement (3) according to one of claims 7 to 9, **characterized in that** the at least one filter layer (41, 43) is made from woven textile material.

11. Arrangement (3) according to one of claims 7 to 10, **characterized in that** the at least one filter layer (41, 43) is made from non-woven textile material.

12. Arrangement (3) according to one of claims 5 to 9, **characterized in that** the filter bag (25) comprises at least two layers (41, 43) which are composed of at least one semi-permeable material each, wherein each semi-permeable material is made from fibers (45, 47).

13. Urea sensor system (1), comprising at least one fluid sensor (15), **characterized in that** the at least one fluid sensor (15) is arranged in the sensor volume (21) of an arrangement (3) according to any of claims 1 to 12.

14. Urea sensor system (1) according to claim 13, **characterized in that** the system (1) comprises at least one inlet (13) for a suction tube (9) which is not enclosed by the at least one filter bag (25).

15. Semi permeable filter member (24) for protecting at least one fluid sensor (15) of a sensor system (1), **characterized in that** the filter member (24) is formed as a filter bag (25) of an arrangement (3) according to any of claims 1 to 12 and/or of a urea sensor system (1) according to claim 13 or 14.
